(19)

**Europäisches Patentamt**
**European Patent Office**
**Office européen des brevets**

(11) **EP 4 528 316 A1**

(12) **EUROPEAN PATENT APPLICATION**

(43) Date of publication:
**26.03.2025 Bulletin 2025/13**

(21) Application number: **24192174.1**

(22) Date of filing: **31.07.2024**

(51) International Patent Classification (IPC):
**G01S 7/35** (2006.01)    **G01S 13/34** (2006.01)
**G01S 13/58** (2006.01)

(52) Cooperative Patent Classification (CPC):
**G01S 7/356; G01S 7/354; G01S 13/343;**
**G01S 13/584**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **20.09.2023 US 202318370697**

(71) Applicant: **NXP B.V.**
**5656 AG Eindhoven (NL)**

(72) Inventors:
• **Li, Jun**
**5656AG Eindhoven (NL)**
• **Wu, Ryan Haoyun**
**5656AG Eindhoven (NL)**

(74) Representative: **Schmütz, Christian Klaus**
**Johannes**
**NXP Semiconductors Germany GmbH**
**Intellectual Property Group**
**Beiersdorfstr. 12**
**22529 Hamburg (DE)**

(54) **RADAR INTERFERENCE MITIGATION AND TARGET RADAR DATA GAP FILLING**

(57)    A radar interference mitigation method includes producing a plurality of frequency data sets from digitized samples generated from a received radar signal. Each frequency data set of the plurality of frequency data sets is associated with one received chirp reflection of a plurality of radar chirp reflections in the received radar signal. The method also includes determining a threshold based on magnitudes of samples across the plurality of frequency data sets. The method further includes suppressing samples in the plurality of frequency data sets that exceed the threshold to produce a plurality of modified frequency data sets. The range of one or more targets is computed based on the plurality of modified frequency data sets.

100-2

RADAR MCPU 138

① ← RADAR CONTROLLER 140

RX PROCESSOR 142

② → INTERFERENCE CANCELLATION 144

INT SUPRRESSED ADC SAMPLES 146

FAST-TIME (RANGE) SPECTRUM 148

RANGE CHIRP ANTENNA CUBE 150

SLOW-TIME (DOPPLER) SPECTRUM 152

RANGE DOPPLER ANTENNA CUBE 154

DETECTION (CFAR) 156

DETECTED RANGE-DOPPLER CELLS 158

MIMO ARRAY MEASUREMENT CONSTRUCTION 160

ARRAY MEASUREMENT VECTOR 162

AOA ESTIMATION 164

TARGET INFO 166

170

**FIG. 2**

EP 4 528 316 A1

**EP 4 528 316 A1**

**Description**

BACKGROUND

Many modern automobiles rely on radar to support autonomous driving or other driver assistance features. Some automotive radar systems typically operate in the frequency band between 77 gigahertz (GHz) to 81 GHz with a radar sweep bandwidth in the range of several hundred megahertz (MHz) to more than 1 GHz. Like other radar systems, automotive radar systems are susceptible to interference. For example, in highly congested traffic scenarios, other nearby vehicles also equipped with radar may interfere with an automobile's target radar signal, thereby affecting the automobile's ability to detect and avoid other objects in its environment. As such, radar interference mitigation techniques are sometimes employed to reduce interference. However, in some cases conventional radar interference mitigation techniques reduce the signal strength of the target radar signal or are not able to adequately mitigate the interference especially when the interference bears a high correlation with the target radar signal or when multiple distinct interferences coexist.

BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIGs. 1 and 2 show examples of a radar front end and a radar master controller processing unit, respectively, in a radar system configured to implement interference mitigation and gap filling in accordance with various embodiments.

FIG. 3 shows an example of a vehicular control system including a radar system, such as the radar system of FIGs. 1 and 2, in accordance with various embodiments.

FIG. 4 shows an example of an interference scenario for a radar system in accordance with various embodiments.

FIG. 5 shows an example of a graph illustrating various parameters of radar chirps in a transmitted radar signal and a corresponding received target radar signal in accordance with various embodiments.

FIG. 6 shows an example of a frequency spectrum (illustrated as a spectrogram) of a nominal (i.e., no interference) chirp reflection in a received target radar signal in accordance with various embodiments.

FIG. 7 shows an example of a graph illustrating various parameters of a target radar signal and an interference signal in accordance with various embodiments.

FIG. 8 shows an example of a frequency spectrum (illustrated as a spectrogram) depicting the interference portion of a chirp reflection in a received radar signal in accordance with various embodiments.

FIG. 9 shows an example of a series of frequency spectrums (illustrated as spectrograms) generated by a central radar processor in accordance with various embodiments.

FIG. 10 shows an example of a flowchart illustrating a Time-Frequency-Chirp Thresholding (TFCT) interference mitigation process in accordance with various embodiments.

FIG. 11 shows an example set of frequency spectrums (illustrated as spectrograms) depicting a scenario in which frequency spectrum samples associated with a target radar signal are eliminated in accordance with various embodiments.

FIG. 12 shows an example flowchart illustrating a method for Gap Filling (GF) in accordance with various embodiments.

FIG. 13 shows an example of a process flow diagram with TFCT and GF in accordance with various embodiments.

FIG. 14 shows frequency spectrums (illustrated as spectrograms) depicting features of TFCT and GF in accordance with various embodiments.

DETAILED DESCRIPTION

Many automobiles are equipped with radar systems to support features such as advanced driver assistance systems (ADAS) or autonomous driving (AD). ADAS/AD depends on accurate and up-to-date representations of the automobile's surrounding environment to ensure that the automobile is able to detect nearby objects. To detect nearby objects (also referred to as targets), a radar system in the automobile transmits a radar signal configured as a series of radar chirps that reflect off of one or more targets and propagate back toward the radar system as a target radar signal. The target radar signal includes reflections of the series of radar chirps. Based on subsequent processing of the received target radar signal, the radar system is able to determine the positional characteristics (e.g., the range, the velocity, or the angular direction) of the one or more targets, and thus to construct a representation of the automobile's surroundings to support ADAS/AD. However, in addition to the target radar signal, the radar signal received by the radar system also typically includes interference which can affect the radar system's ability to accurately identify and process the target radar signal. Radar interference mitigation attempts to remove interference from the received radar signal to isolate the target radar signal for further processing. In many cases, conventional radar interference mitigation techniques are not able to identify and suppress interference in the received radar signal if the interference is highly correlated with the target radar signal or multiple distinct interferences coexist. For example, nearby vehicles also equipped with radar may utilize radar signals with a similar frequency or a similar radar chirp waveform as the target radar signal, and the interference from these similar signals is difficult to mitigate with conventional techniques. In addition, conventional radar interference mitigation techniques may end up reducing the signal strength of the target radar signal.

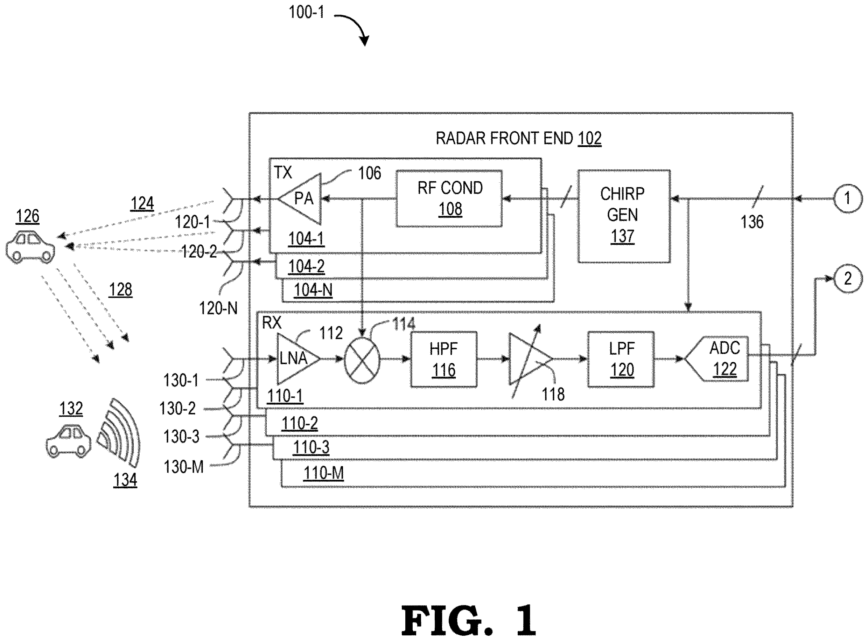

FIGs. 1-14 and the ensuing description provide radar interference mitigation techniques that identify and remove interference from a received radar signal even in situations in which the interference is highly correlated with the target radar signal. In addition, the figures and the ensuing description provide target radar signal recovery techniques to recover elements from the target radar signal that are removed during radar interference mitigation, thereby minimizing the loss in target radar signal power. In this manner, the present disclosure provides techniques that effectively reduce interference in the received radar signal while also maintaining a robust signal strength of the target radar signal. This improves the performance of the radar system.

To illustrate, in some embodiments, a radar transmitter in a radar transceiver generates and transmits a radar signal with a plurality of radar chirps. The radar signal reflects off of one or more targets and is received by a radar receiver in the radar transceiver as a received target radar signal including a plurality of received radar chirp reflections. In some cases, the radar signal received at the radar receiver also includes one or more interference signals in addition to the received target radar signal. The radar receiver converts the received radar signal into the digital domain and forwards the digitized signal to a central radar processor (also referred to as a radar master controller processing unit, or radar MCPU). The central radar processor generates a set of frequency data associated with each received radar chirp reflection of the plurality of received radar chirp reflections to produce a plurality of frequency data sets. In some embodiments, each frequency data set is generated in the form of a spectrogram or other representation of a frequency data (e.g., a table, graph, or the like). Each frequency data set is therefore associated with a corresponding chirp index and includes samples of the received radar signal in the time and frequency domain. The central radar processor determines a threshold based on magnitudes of the samples across the plurality of frequency data sets to identify samples attributed to interference. In this manner, the central radar processor performs a 3-dimensional analysis across the time, frequency, and chirp index domains to identify interference in the received radar signal. The central radar processor suppresses the samples in the plurality of frequency data sets that exceed the threshold to produce a plurality of modified frequency data sets. By suppressing the samples that exceed the threshold, the central radar processor removes samples in the frequency data set that are attributed to interference and generates the plurality of modified frequency data sets to represent the target radar signal more accurately. In some embodiments, the central radar processor recovers parts of the target radar signal in the plurality of modified frequency data sets that were removed during the sample suppression stage by employing an interpolation technique to fill in gaps in the target radar signal in the frequency data sets. The central radar processor then computes a range spectrum associated with the one or more targets based on the plurality of modified frequency data sets to estimate the range of (or distance to) the one or more targets. In this manner, the central radar processor is able to effectively mitigate interference in the received radar signal while also maintaining a strong signal strength of the target radar signal associated with the one or more targets.

In some embodiments, the radar interference mitigation and target radar signal recovery techniques described herein are referred to as Time-Frequency-Chirp Thresholding (TFCT) and Gap Filling (GF), respectively. TFCT allows for frequency modulated continuous wave (FMCW) radar to operate in a high-interference environment by extending the time-frequency analysis (i.e., a 2-dimensional analysis) of the received radar signal across multiple chirps into a time-frequency-chirp index analysis (i.e., a 3-dimensional analysis). This facilitates the detection and subsequent removal of interference even in situations with a high number of interferences within one chirp and a large dynamic range of interference since the interference across a plurality of chirps is likely to be non-coherent while the target radar signal will be coherent (i.e., constant position across spectrograms of multiple chirps). By exploiting the non-coherent property of interference signals and the coherent property of the target radar signals across multiple chirps, TFCT detects and eliminates interference more effectively compared to conventional radar interference mitigation methods. Additionally, GF accounts for the cases that result in reduction in target radar signal strength due to overlap between the target radar signal and the interference signal. For example, in some cases, accurate interference detection and mitigation may result in a higher loss of target radar signal power when many interferences coexist within a single chirp and all the interfered elements in the spectrogram of that chirp are detected and removed. Therefore, GF recovers target radar signal samples that are removed during inference mitigation (e.g., during TFCT) so that the target radar signal is restored to a more robust signal. As a result, in some embodiments, TFCT and GF effectively mitigate interference and enhance the signal to noise ratio (SNR) to improve the range estimation accuracy, as well as the accuracies of subsequent estimations such as velocity or angle of arrival estimations, of the radar system.

In some embodiments, any of the elements, components, or blocks shown in the ensuing figures are implemented as one of software executing on a processor, hardware that is hard-wired (e.g., circuitry) to perform the various operations described herein, or a combination thereof. For example, one or more of the described blocks or components (e.g., Interference Cancellation, Fast-Time (Range) Spectrum, or other components or blocks) represent software instructions that are executed by hardware such as a digital signal processor, an application-specific integrated circuit (ASIC), a set of logic gates, a field programmable gate array (FPGA), programmable logic device (PLD), a hardware accelerator, a parallel processor, or any other type of hardcoded or programmable circuit.

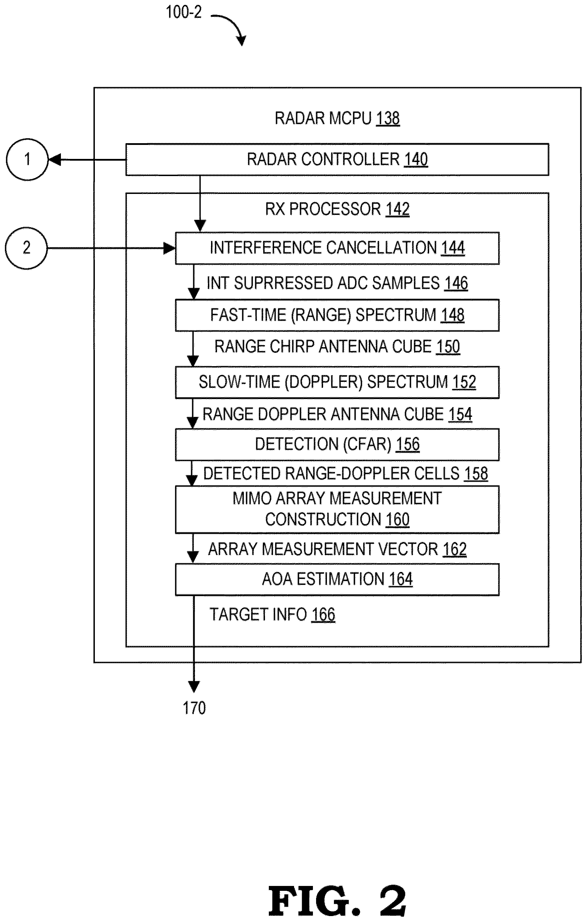

FIGs. 1 and 2 show an example radar system 100 (including a first radar system portion 100-1 of FIG. 1 and a second radar system portion 100-2 of FIG. 2) that implements TFCT and GF techniques in accordance with various embodiments. FIG. 1 shows a radar front end 102 of the radar system 100 and FIG. 2 shows a radar master controller processing unit (MCPU) 138 of the radar system 100.

Referring to FIG. 1, in some embodiments, the radar front end 102 includes multiple transmitters 104-1 to 104-N (collectively referred to as transmitters 104). In some embodiments, each transmitter 104 includes a power amplifier (PA) 106 and a radio frequency (RF) conditioning (cond.) component 108. In some embodiments, the radar front end 102 also includes multiple receivers 110-1 to 110-M (collectively referred to as receivers 110). One or more of the receivers 110 includes a low noise amplifier (LNA) 112, a deramp mixer 114 , a high pass filter (HPF) 116, a power amplifier 118, a low pass filter (LPF) 120, and an analog-to-digital converter (ADC) 122.

The radar front end 102 also includes transmission antennas 120. In some embodiments, each transmitter 104 is configured with its own transmission antenna 120 (i.e., transmitter 104-1 with transmission antenna 120-1, transmitter 104-2 with transmission antenna 120-2, transmitter 104-3 with transmission antenna 120-3, and transmitter 104-N with transmission antenna 120-N). Transmitters 104 send transmitted signals 124 toward one or more targets 126 (one shown for clarity). The transmitted signals are reflected from the target 126, and the target reflected signals 128 (collectively referred to as target radar signal) are directed back to the radar system 100. The target reflected signals 128 are received by reception antennas 130-1 to 130-M. In some embodiments, each receiver 110 is configured with its own reception antenna 130 (i.e., receiver 110-1 with reception antenna 130-1, receiver 110-2 with reception antenna 130-2, receiver 110-3 with reception antenna 130-3, receiver 110-M with reception antenna 130-M). Along with receiving the target reflect signals 128, the receivers 110 receive other unwanted signals. For example, an interferer 132 (in this example, radar signals from another vehicle) transmits interference 134 which is also received by the receivers 110.

In some embodiments, the radar front end 102 receives program, control trigger, and reference clock signals 136 that are utilized for chirp generation at a chirp generator 137 or received signal processing in the receivers 110. For example, the reference clock signal is a local oscillator (LO) signal and the control trigger is a chirp start trigger signal that are input to the chirp generator 137 to generate radar chirp sequences that are further processed (e.g., by RF cond. 108 and PA 106) before being transmitted by the transmit antennas 120 of the radar front end 102.

Referring now to FIG. 2, in some embodiments, the radar system 100 includes a radar master controller processing unit (MCPU) 138. In some embodiments, the radar MCPU 138 includes a radar controller 140 and a receiver (RX) processor 142. The radar controller 140 provides the program, control trigger, and reference clock signals 136 as described above. The receiver processor 140 receives the digitized signals from the radar front end 102, e.g., from the ADCs 122 of the receivers 110. In some embodiments, the RX processor 140 includes an interference cancellation component 144, which provides the interference suppressed ADC samples 146. A fast time (range) spectrum component 148 receives and processes the interference suppressed ADC samples 146 and provides a range chirp data 150 indicative of chirp reflections received at the reception antennas 130. In some embodiments, the range chirp data 150 is cubed with an x-axis and a y-axis made up of fast time data and a z-axis representing data for each of the reception antennas 130. The range chirp data 150 is received and processed by a slow time (Doppler) spectrum component 152. The slow time spectrum component 152 provides range Doppler data 154 that is cubed with x-axis and y-axis made up of slow time data and a z-axis representing data for each of the reception antennas 130. The range Doppler data 154 is received and processed by a constant false alarm rate (CFAR) detection component 154. The detection component 154 provides detected range and Doppler cell data 158. A multiple-input multiple-output (MIMO) array measurement construction component 160 receives and processes the detected range and Doppler cell data 158. The MIMO array measurement construction component 160 provides an array measurement vector 162. The array measurement vector is received and processed by a target Angle of Arrival (AoA) estimation component 164. The target AoA estimation component 164 provides target information 166 attributed to the target 126 detected by radar system 100 to other components via data interface 170. For example, the other components include software modules executed by a processor to implement advanced driver assistant system (ADAS) or autonomous driving (AD) perception and vehicular control systems.

In some embodiments, the radar system 100, including the radar front end 102 and the radar MCPU 138, is configured to perform the TFCT and GF techniques described herein. The radar front end 102 generates radar chirps and transmits the radar chirps via the transmission antennas 120 as a radar signal 124. The radar front end 102 also receives the reflected radar signal 128 after it bounces off a target 126 and digitizes the received radar signal, which includes reflections of the transmitted radar chirps, for further processing at the radar MCPU 138. The radar MCPU 138 includes software and/or hardware to perform the TFCT interference mitigation and the GF techniques based on the digitized signal received from the radar front end 102. For example, one or more of the interference cancellation component 144 or the Fast-Time (Range) spectrum component 148 performs the TFCT interference mitigation or the GF techniques described herein.

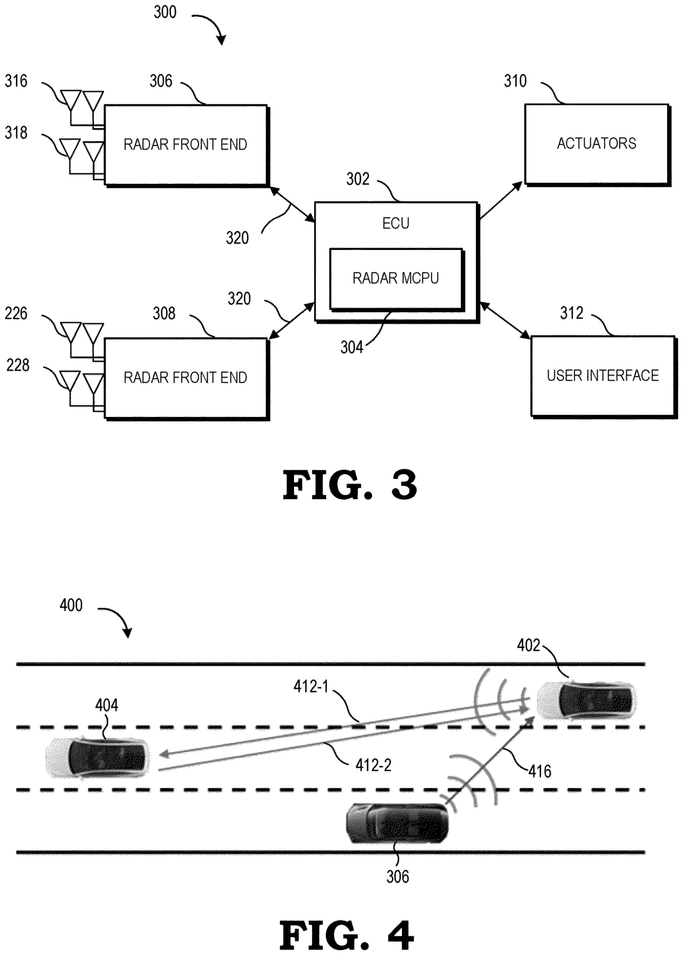

FIG. 3 shows an example of a vehicular control system 300 in accordance with some embodiments. The vehicular control system 300 is implemented, for example, in an automobile and may be used to assist in driver-assistance or autonomous driving functions. As illustrated, the vehicular control system 300 includes a radar system which includes radar front ends 306, 308 and a radar MCPU 304. In some embodiments, radar front ends 306, 308 correspond to radar front end 102 in FIG. 1 and radar MCPU 304 corresponds to radar MCPU 138 in FIG. 2.

In some embodiments, the vehicular control system 300 includes an electronic control unit (ECU) 302. The ECU 302 includes the radar MCPU 304 as well as other processing circuitry, e.g., a central processing unit (CPU), to perform various processing functions related to vehicular control. The radar MCPU 304 is coupled to radar front ends 306, 308 via interfaces 320. While two radar front ends 306, 308, are shown in FIG. 3, this number is for clarity purposes and may be scalable to a larger quantity. In some embodiments, the radar front ends 306, 308 are located at various positions around an automobile housing vehicular control system 300. For example, one radar front end 306 is positioned at the front end of the automobile and the other radar front end 308 is positioned at the rear end of the automobile. In some embodiments, radar front end 306 includes a plurality of antennas 316, 318. For example, plurality of antennas 316 are transmission antennas and plurality of antennas 318 are reception antennas. Similarly, in some embodiments for radar front end 308, the plurality of antennas 326 are transmission antennas and the plurality of antennas 328 are reception antennas. In some embodiments, the plurality of antennas associated with each of radar front ends 306, 308 support MIMO radar configurations. While two antennas are shown for each of the plurality of antennas 316, 318, 326, 328, this number is for clarity purposes and may be scalable to larger quantities (e.g., three, four, or more antennas) in some embodiments.

In some embodiments, the radar MCPU 304 is implemented as a micro-controller unit (MCU) or other processing unit that is configured to execute radar signal processing tasks such as, but not limited to, object identification, computation of object distance, object velocity, and object direction (collectively referred to as "radar information"). In some embodiments, the radar MCPU 304 is additionally configured to generate control signals based on the radar information. The radar MCPU 304 is, for example, configured to generate calibration signals, receive data signals, receive sensor signals, generate frequency spectrum shaping signals (such as signals associated with the FCMW radar techniques described herein) and/or state machine signals for radio frequency (RF) circuit enablement sequences. In addition, in some embodiments, the radar MCPU 304 is configured to program the radar front ends 306, 308 to operate in a coordinated fashion by transmitting MIMO waveforms for use in constructing a virtual aperture from a combination of the distributed apertures formed by the plurality of transmission and reception antennas shown in FIG. 3.

The radar front ends 306, 308, in some embodiments, include radar front end chip circuitry that is coupled to the respective pluralities of antennas to transmit radar signals (e.g., in the form of radar chirp sequences), to receive reflected radar signals, and to digitize these received radar signals for forwarding to the radar MCPU 304 over interface 320. In some embodiments, the radar MCPU 304 performs radar processing tasks based on the digitized radar signals received from the radar front ends 306, 308 to provide radar information to the ECU 302. The ECU 302 uses this radar information to control one or more actuators 310 such as a steering actuator, braking actuator, or throttle actuator to assist in driver-assistance or autonomous driving functions. In some embodiments, the ECU 302 displays the radar information or associated information via a user interface 312 such as a screen display, a speaker, or a light (e.g., in a side mirror or on a dashboard) to alert the driver of nearby objects.

FIG. 4 shows an example scenario 400 illustrating a type of interference that the TFCT and GF techniques described herein help to identify and eliminate in accordance with various embodiments. In scenario 400, a radar system (such as radar system 100 of FIGs. 1 and 2) of a vehicular control system (such as vehicular control system 300 of FIG. 4) in vehicle 402 emits a radar signal 412-1 which reflects off of a target 404 and travels back in the direction of vehicle 402 as reflected radar signal 412-2 (also referred to as target radar signal). In addition to receiving the target radar signal 412-2, the radar system in vehicle 402 also receives an interference signal 416 which is produced by another radar system in a nearby vehicle 406. In some scenarios, the interference signal 416 may be highly correlated with the target radar signal 412-2 and significantly interfere with the target radar signal 412-2. By implementing the TFCT and the GF techniques described herein, the radar system in vehicle 402 is able to accurately identify and reduce the impact of the interference signal 416 while ensuring that the target radar signal 412-2 maintains a robust signal strength so that the radar system in vehicle 402 is able to accurately detect and monitor the target 404.

In some embodiments, the transmitted radar signal 412-1 is a frequency modulated continuous waveform (FMCW) that may be represented as:

$$s_p(t) = e^{j\pi\alpha t^2}, 0 < t < T_a \qquad (1)$$

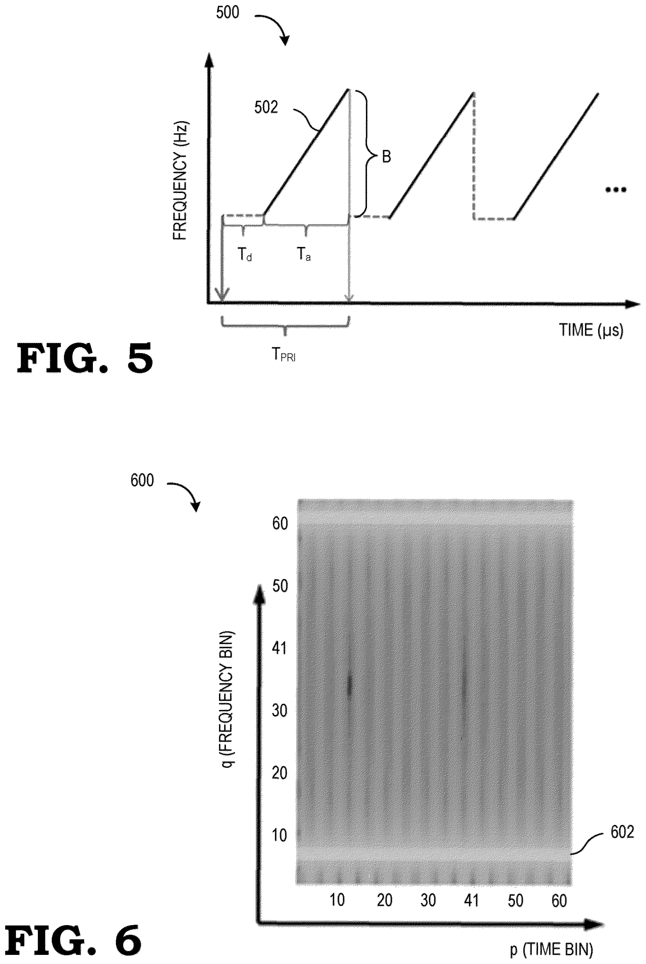

where $\alpha$ is the chirp slope given by $\alpha = \dfrac{B}{T_a}$, $T_a$ represents the active duration of a single chirp pulse, and B is the chirp bandwidth illustrated in graph 500 in FIG. 5. When M pulses are transmitted per coherent processing interval (CPI), the modulated transmitted radar signal 412-1 may be represented as:

$$s_{tx}(t) = \sum_{m=0}^{M-1} s_p(t - mT_{PRI}) e^{j2\pi f_c t} \qquad (2)$$

where $f_c$ is the carrier frequency, $T_{PRI}$ is the pulse repetition interval (PRI) which typically includes both an active time ($T_a$) and a dead time ($T_d$), with $T_{PRI} = T_a + T_d$ and $T_d > 0$ as shown by the graph 500 illustrating a number of chirps 502 (only one labeled for clarity) in FIG. 5. In some embodiments, the interfering signal 416 can be represented by the term $\tilde{s}_{tx}(t)$ and follows a similar waveform formula as represented in equations (1) and (2), with potential differences in parameters such as carrier frequency $\tilde{f}_c$, chirp slope $\tilde{\alpha}$, active time duration $\tilde{T}_a$, pulse repetition interval $\tilde{T}_{PRI}$, and pulse number $M$.

Referring to the target radar signal portion of the signal received at radar system of vehicle 402, the target radar signal 412-2 is received and demodulated at the radar front end (e.g., such as at radar front end 102 of FIG. 1 or radar front ends 306, 308 of FIG. 3) of the radar system in vehicle 402. The target radar signal 412-2 is subjected to a dechirping process and can be represented by as:

$$s_{rx}(t) = a s_{tx}(t - \tau) \cdot s_{tx}^*(t)$$
$$\approx a \sum_{m=0}^{M-1} s_p(t - \tau - mT_{PRI}) s_p^*(t - mT_{PRI}) e^{-j2\pi f_c \tau} \qquad (3)$$

where $a$ is the complex target amplitude and $\tau$ is the time delay due to the round-trip propagation between vehicle 402 and the target 404, which can be approximated as:

$$\tau \approx \frac{2(r + \dot{r}mT_{PRI})}{c} \qquad (4)$$

where c is the speed of light and $r$ and $\dot{r}$ are the range and velocity of the target, respectively.

After the received target radar signal is filtered by a low-pass filter (LPF) such as LPF 120 of FIG. 1 and sampled by an ADC such as ADC 122 of FIG. 1 with a sampling interval, $T_s$, the ADC output, $s_{rx}(m, n)$, can be expressed as a function of slow time $m$ and fast time $n$ (e.g., $t = mT_{PRI} + nT_s$) with $N$ active samples per PRI, $n \in \{0,1,2, ..., N - 1\}$:

$$s_{rx}(m, n) \approx a e^{-j2\pi f_c \frac{2r}{c}} e^{-j2\pi f_r n} e^{-j2\pi f_d m} \qquad (5)$$

where $f_r = \dfrac{2r\alpha T_s}{c}$ represents the normalized range frequency and $f_d = \dfrac{2\dot{r}T_{PRI}}{\lambda}$ is the normalized Dopper frequency. In this manner, the range and velocity information can be obtained by applying Fourier transform along the n-dimension (e.g., via a Range FFT) and the m-dimension (e.g., via a Doppler FFT), respectively. However, due to the presence of interference such as interfering signal 416, the target information becomes obscured after range and Doppler FFT processing.

In some embodiments, to perform TFCT, the radar MCPU 138 calculates the short-time Fourier transform (STFT) of each received chirp reflection in the target radar signal. The STFT process is a series of shorter FFTs operated on windowed ADC samples. In some cases, two parameters mainly control the STFT process: 1) the window size, and 2) the stride or sliding step size. For the $m^{th}$ chirp which contains length-$N$ ADC sample vector, e.g., $[s_{rx}(m, 0), s_{rx}(m, 1), ..., s_{rx}(m, N - 1)]$, an STFT window size $L$ [samples], and a stride size $R$ [samples], the $p$-th time-bin STFT output may be represented as:

$$S(m, p, q) = STFT\{s_{rx}(m, n)\}$$

$$= \sum_{n=0}^{L-1} s_{rx}(m, n) w(n - p \cdot R) e^{-j2\pi \frac{nq}{L}} \qquad (6)$$

where $w(i)$ is the rectangular window function.

FIG. 6 shows an example of a frequency data set represented as a spectrogram 600 for a nominal (i.e., no interference) chirp reflection in a received target radar signal in accordance with various embodiments. The x-axis is the time bin (p), and the y-axis is the frequency bin (q). As shown in spectrogram 600, the chirp reflection in the target radar signal is portrayed as a single horizontal line 602 in the time-frequency domain. Based on representation provided in equation (5), the position and the amplitude of line 602 will not change with varying chirp index, $m$. In other words, spectrograms generated for other ones of the plurality of chirp reflections will be similar in appearance to spectrogram 600 under nominal conditions since the target radar signal frequency in the other ones of the plurality of chirp reflections is the same as the one portrayed in spectrogram 600.

Referring now to the interference portion of the signal received at radar system of vehicle 402 (in this example, interference signal 416 from nearby vehicle 406), the demodulated and dechirped interference signal 416 can be represented as:

$$\tilde{s}_{rx}(t) = \tilde{a}\tilde{s}_{tx}(t) \cdot s_{tx}^{*}(t) \qquad (7)$$

Equation (7) characterizes the complex nature of the received interference signal with varying waveform configurations. In some embodiments, the time of interest can be concentrated on the time period at $mT_{PRI} \leq t \leq mT_{PRI} + T_{a}$. Assuming the $\tilde{m}^{th}$ interference chirp is mixed with the reference signal in this time period, then the received radar signal (including both the chirp reflection and the interference chirps from the interfering radar signal) can be represented as:

$$\tilde{s}_{rx}(m, n) =$$

$$\tilde{a} e^{j\pi(\tilde{\alpha}-\alpha)(nT_s)^2} e^{j2\pi(\tilde{\alpha}mT_{PRI} - \alpha mT_{PRI} - \tilde{\alpha}\tilde{m}\tilde{T}_{PRI} + \tilde{f}_c - f_c) nT_s} e^{j2\pi \cdot g(\tilde{\alpha}, \alpha, T_{PRI}, \tilde{T}_{PRI}, \tilde{f}_c, f_c)} \qquad (8)$$

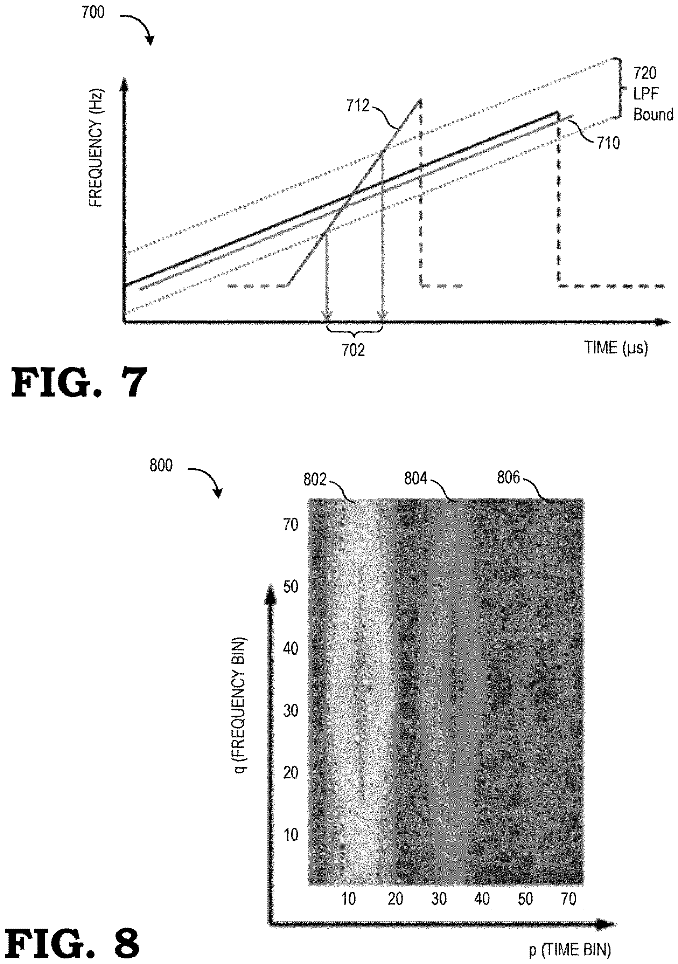

From Equation (8), the received interference signal (indicated by the parameters with tildes) at the ADC output can be considered a "false" chirp signal with a "false" chirp slope equal to the difference in slopes between the chirps in the received radar signal 412-2 and the interfering radar signal 416 (i.e., $\tilde{\alpha} - \alpha$), and its start frequency and start time are both functions of $\tilde{\alpha}$, $\alpha$, $T_{PRI}$, $\tilde{T}_{PRI}$, $\tilde{f}_c$, and $f_c$. The duration of the interference 702, as shown in the graph 700 of FIG. 7, is dependent on both the "false" chirp slope (i.e., the slope of the interference signal 712) and the bounds 720 of the low-pass filter (i.e., the bounds of LPF 120 of FIG. 1). A chirp reflection of the target radar signal 710 (i.e., corresponding to received radar signal 312-2) is also depicted in FIG. 7.

FIG. 8 shows an example of a frequency data set represented as a spectrogram 800 depicting only the interference portion of a chirp reflection in a received radar signal in accordance with various embodiments. The x-axis is the time bin (p), and the y-axis is the frequency bin (q). Referring to FIG. 3 as an illustrative example, spectrogram 800 shows the impact of the interference signal 416 in the radar signal received at the radar system in vehicle 402. As shown, after the deramp mixing and ADC sampling at the receiver in the radar front end, the interference components of the received radar signal are represented in the generated spectrogram 800 as a series of diamonds 802-806 with diminishing intensity (i.e., diamond 802 has the strongest intensity, and diamond 806 has the weakest intensity). The interference components (e.g., diamonds 802-806) in the received radar signal are portrayed as "false" chirps in the time-frequency domain with a chirp slope that is different than the received radar chirp reflection that is part of the target received radar signal depicted in FIG. 6. That is, the interference components represented by diamonds 804-808 have a non-zero slope compared to the horizontal line attributed to the target radar signal as illustrated in FIG. 6.

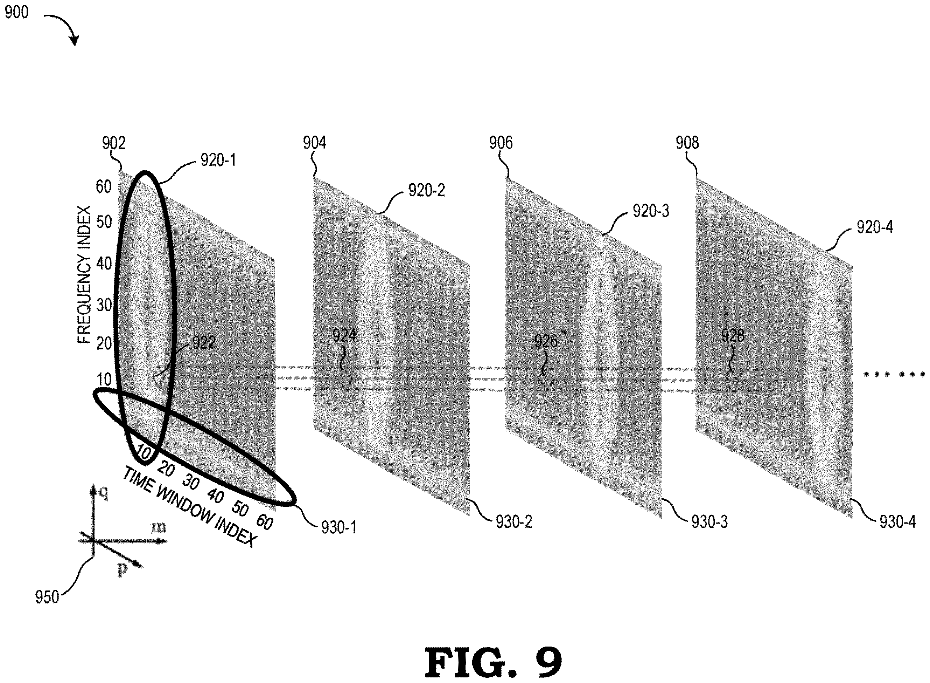

Based on the parameters shown in Equation (8), the position and amplitude of the interference signal is likely to change across the number of received chirp reflections (i.e., the chirp index $m$). That is, the interference signal is non-coherent since the interference phase is not constant compared to the constant phase of the received chirp reflections in the target radar signal. Thus, the position of the interference signal will dynamically change across the spectrograms for each subsequent chirp while the position of the received chirp reflections of the target radar signal will remain substantially the same. FIG. 9 provides a series of frequency data sets illustrating this difference between interference and the received chirp reflections of the target radar signal.

FIG. 9 shows an example of a series 900 of frequency data sets represented as spectrograms 902-908 generated by the central radar processor (e.g., corresponding to radar MCPU 138 of FIG. 2) based on a radar signal received at the radar front end (e.g., corresponding to radar front end 102 in FIG. 1) in accordance with various embodiments. The spectrograms 902-908 illustrate samples of the signal received at the radar system including the target radar signal 930 (shown, for example, in FIG. 6) and the interference signal 920 (shown, for example, in FIG. 8). Four spectrograms 902-908 are shown for the purposes of this explanation. In other embodiments, other numbers (e.g., 2 or more) of spectrograms are used to identify the interference due to its non-coherency across multiple spectrograms.

As illustrated in FIG. 9, the series 900 of spectrograms 902-908 provide spectrogram samples in three dimensions: the time dimension (corresponding to "p" on 3-D axis 950), the frequency dimension (corresponding to "q" on 3-D axis 950), and the chirp index dimension (corresponding to "m" on 3-D axis 950). Each of the spectrograms 902-908 depicts the received radar signal in the time-frequency domain at a particular instant associated with a received chirp reflection of a plurality of received chirp reflections. That is, the first spectrogram 902 depicts the time on the x-axis and frequency on the y-axis of a first received radar chirp reflection, the second spectrogram 904 depicts the time on the x-axis and frequency on the y-axis of a second received radar chirp reflection, the third spectrogram 906 depicts the time on the x-axis and frequency on the y-axis of a third received radar chirp reflection, and the fourth spectrogram 908 depicts the time on the x-axis and frequency on the y-axis of a fourth received radar chirp reflection. In the first spectrogram 902, the spectrogram samples associated with the interference 920-1 and the spectrogram samples associated the target radar signal 930-1 are outlined and labeled. In the other spectrograms 904-908, the samples corresponding to the interference 920 and the target radar signal 930 are labeled but not outlined for clarity purposes.

Series 900 shows that the samples corresponding to the target radar signal 930 remain largely the same across spectrograms 902-908 due to the coherent nature of the radar chirps in the transmitted radar signal and the corresponding reflections of the radar chirps in the target radar signal received at the radar receiver. On the other hand, the samples corresponding to the interference 920 received at the radar receiver differ across the spectrograms 902-908. For example, the interference sample at cell 922 in spectrogram 902 is absent from the same cell 924 in spectrogram 904, cell 926 in spectrogram 906, and cell 928 in spectrogram 908. The TFCT techniques described herein leverage this difference in the samples associated with the target and the samples associated with the interference across a plurality of spectrograms to identify and suppress the samples associated with the interference so that the samples associated with the target radar signal can be better isolated for range estimation processing.

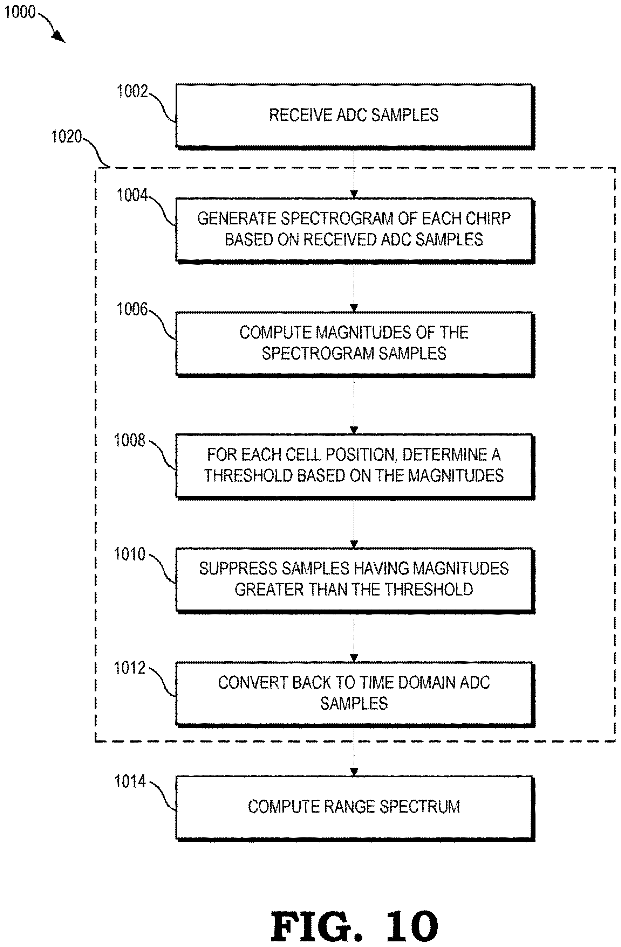

FIG. 10 shows an example of a flowchart 1000 illustrating an interference mitigation process in accordance with various embodiments.

At 1002, the central radar processor receives the ADC samples from the radar front end. For example, referring to FIGs. 1 and 2, this corresponds to the RX processor 142 in the radar MCPU 138 receiving the output from the ADCs 122 at the radar front end 102. The received ADC samples, $y(m,n)$, received by the central radar processor contain the target radar signal shown in equation (5) and the interference signal shown in equation (7) as well as noise, $\varepsilon$, and can be expressed as:

$$y(m, n) = s_{rx}(m, n) + \tilde{s}_{rx}(m, n) + \varepsilon(m, n) \qquad (9)$$

Thus, prior to computing the range spectrum at block 1014, the central radar processor performs the TFCT interference mitigation process 1020 in order to remove or mitigate the interference component, $\tilde{s}_{rx}(m,n)$, from the received ADC samples, $y(m,n)$. In some embodiments, blocks 1004-1012 associated with the TFCT interference mitigation process 1020 are performed by the interference cancellation component 144 of the RX processor 142 prior to the computation of the range spectrum 1014 that is performed by the Fast-Time (Range) Spectrum component 148.

At 1004, the central radar processor generates a frequency data set (e.g., such as a spectrogram) for each received radar chirp reflection using a Short-Time Fourier Transform (STTF). In some embodiments, the STTF carried out on the received ADC samples, $y(m,n)$, is represented as:

$$y(m, p, q) = STFT\{y(m, n)\} = \sum_{n=0}^{L-1} y(m, n)w(n - p \cdot R)e^{-j2\pi\frac{nq}{L}} \qquad (10)$$

where $w(i)$ is the rectangular window function. The STTF produces $M$ frequency data sets (such as a set of spectrograms, where M is a positive integer) per *M* chirp reflections within one data frame.

At 1006, the central radar processor computes the magnitude (i.e., absolute value) for each cell in the spectrograms generated at block 1004. This step produces a 3-dimensional data cube such as the series 900 of spectrograms 902-908 shown in FIG. 9. The three dimensions are represented by the variables *m, p,* and *q* where the *m* dimension is the chirp index (which corresponds to one of the spectrograms, for example), the *p* dimension is the spectrogram time bin index, and the *q* dimension is the spectrogram frequency bin index. Each cell in the spectrogram corresponds to the same position (i.e., same time bin index *p* and same frequency bin index *q*) as the cells in the other ones of the spectrograms. For example, referring to FIG. 9, cells 922-928 are in the same position in each respective spectrogram 902-908. The cells in the spectrograms corresponding to the same position are represented as vectors *y* (:,*p*,*q*).

At 1008, for each cell position across the spectrograms (e.g., each y(:,*p*,*q*)), the central radar processor determines a threshold based on the magnitudes computed at block 1006. In some embodiments, the interference cancellation component 144 performs a min-of-max operation to generate the threshold in the following manner. First, each vector *y*(:,*p*,*q*) is divided up into multiple sampling operations windows or sections. For example, for a data frame containing 256 chirps (i.e., the length of *y*(:,*p*,*q*) is 256), windows of 16 samples, and a stride of 8 samples, the vector *y*(:,*p*, *q*) is divided into 256/8-1=31 sampling windows that are half overlapping. In each sampling window, the maximum value is identified and recorded. After all of the maximum values are identified for all of the sampling windows, the minimum value of all the maximum values is determined and stored as the min-of-max value. In some embodiments, a detection threshold margin (TH1) (e.g., 2 in linear units or 3 dB in decibel units) is applied to the min-of-max value to compute the threshold of block 1008. While the above embodiment describes the threshold computation step of block 1008 based on a min-of-max operation detection technique, in other embodiments, other detection techniques such as constant false alarm rate (CFAR) detection or median detection are used in place of the min-of-max operation detection technique.

At 1010, the central radar processor (e.g., via the interference cancellation component 144) suppresses the spectrogram samples that are higher than the threshold determined at 1008. That is, all the spectrogram samples with values higher than the threshold value computed at block 1008 are considered interference and are zeroed. For example, this step includes the interference cancellation component 144 zeroing all spectrogram samples that have higher magnitudes than the computed threshold. This step is repeated for all *(p, q)* positions (i.e., time and frequency bin indices) in the spectrograms generated at 1004 to produce a series of modified spectrograms. In this manner, the interference cancellation component 144 identifies and suppresses all of the spectrogram samples identified as being associated with interference.

At 1012, the central radar processor converts the modified spectrograms (i.e., the spectrograms generated at block 1010 after suppressing the samples associated with interference) back into time domain ADC samples. For example, in some embodiments, the interference cancellation component 144 performs an inverse STTF to recover the interference-mitigated ADC sample stream (i.e., the ADC samples received at 1002 with the interference removed) for each chirp reflection so that the range spectrum can be computed at block 1014.

In some embodiments, for the real ADC samples, the spectrograms generated at block 1004 are symmetric, so the thresholding at block 1008 and the suppressing at block 1010 are also symmetric. Thus, a mask to suppress the spectrogram samples can be performed on one half of the spectrogram and also used to suppress the interference in the other half of the spectrogram.

Accordingly, the TFCT interference mitigation technique shown in block 1020 is able to identify interference by implementing a 3-dimensional analysis across the time, frequency, and chirp index domains that leverages the non-coherent aspects of interference across the spectrograms generated at block 1004. However, in some cases where there is a high amount of interference (e.g., multiple nearby vehicles with interfering radar systems) or if the interference is highly correlated with the target radar signal, the TFCT interference mitigation technique described in FIG. 10 may also inadvertently suppress spectrogram samples that are associated with the target radar signal. As such, the RX processor 142 in the radar MCPU 138 implements a Gap Filling (GF) technique to restore target radar signal information that is inadvertently removed by the TFCT interferent mitigation. Thus, in some embodiments, the combination of the TFCT and GF techniques provides a manner to handle more severe interference scenarios with fewer false alarms.

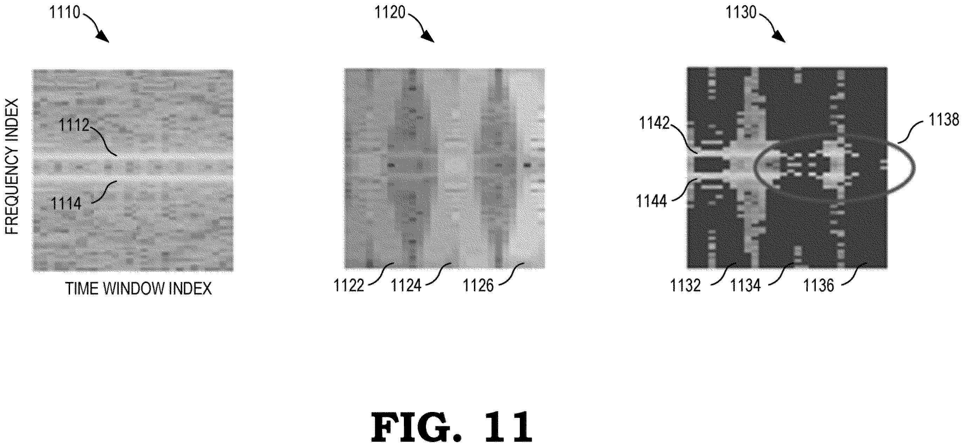

FIG. 11 shows an example of spectrograms 1110-1130 illustrating a scenario in which spectrogram samples associated with a target radar signal that overlap with interference in the time and frequency domain are eliminated in accordance with various embodiments. The first spectrogram 1110 shows the target radar signal component generated based on a received chirp reflection (i.e., one chirp index). The two horizontal lines 1112, 1114 in the spectrogram 1110 correspond spectrogram samples of two targets that are identified based on the received radar chirp reflection. The second spectrogram 1120 shows interferences 1122-1126 that are received in combination with the received radar chirp reflection illustrated in spectrogram 1110. Thus, in some embodiments, cancelling out interferences 1122-1126 via TFCT to isolate the spectrogram samples associated with the targets (i.e., horizontal lines 1112, 1114 ) will produce spectrogram 1130. Thus, by being cancelled out via TFCT, the interference components 1122-1126 that are visible in spectrogram 1120 are not visible in spectrogram 1130. However, some portions of spectrogram samples associated with the targets have also been removed as indicated by the gaps in the horizontal lines 1142, 1144 as shown in area 1138. This decreases the final signal-to-noise ratio (SNR) compared to nominal (i.e., non-interference) conditions. Therefore, in addition to mitigating interference by executing the TFCT technique described above, the present disclosure also provides a GF technique to restore the spectrogram samples associated with the target radar signal that are inadvertently removed during interference mitigation.

In some embodiments, a central radar processor (such as the Rx processor 140 in radar MCPU 138 of FIG. 2) performs GF by executing an interpolation algorithm to restore the target radar signal data samples that are removed during interference mitigation. For example, in some embodiments, the central radar processor executes any one of numerous interpolation algorithms such as a Fourier Transform (FT) interpolation, an autoregressive (AR) Burg algorithm, a compressed sensing algorithm, an amplitude correction algorithm, or a phase retrieval algorithm to perform GF in accordance with various embodiments.

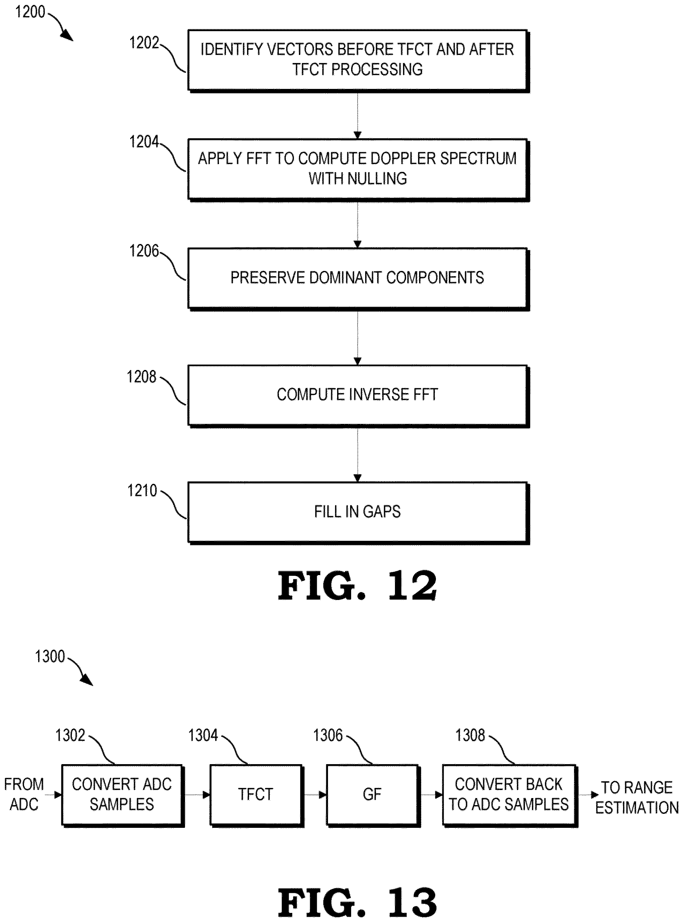

FIG. 12 illustrates an example flowchart 1200 illustrating a method for GF utilizing FT interpolation in accordance with various embodiments.

At 1202, in order to perform GF for every spectrogram sample position (p, q) in Equation (10), the central radar processor (e.g., such as the Rx processor 142 in radar MCPU 138 of FIG. 2) identifies the vectors $y(:,p,q)$ prior to TFCT processing and the modified vectors, $y_0(:,p,q)$, after TFCT processing. That is, the central radar processor starts off GF by selecting the vectors associated with each sample position across the spectrograms as they appeared prior to interference mitigation and the vectors for each sample position across the modified spectrograms as they appear after interference mitigation. At 1204, the central radar processor computes the Doppler spectrum with nulling by applying a FT to $y_0(:,p,q)$ to generate $Y_0 = fft(y_0(:,p,q))$. At 1206, the central radar processor preserves the dominant components by setting all elements of $Y_0$ that are less than $(max(Y_0) - TH2)$ to zero, where TH2 is a threshold value, e.g., 4 dB. At 1208, the central radar processor computes the inverse fast Fourier Transform (FFT) with the dominant components, using $ifft(Y_0)$ to obtain $y_1$. In some embodiments, the central radar processor performs an energy correction based on the number of nulls in the different vectors. Then, at 1210, the central radar processor fills in the gaps of $y_0(:,p,q)$ with $y_1$ to generate $y_{filled} = y_0(:,p,q) + y_1(y_0 == 0)$. Thus, by employing GF as described in flowchart 1200, the central radar processor increases the SNR of the target radar signal by restoring the spectrogram samples associated with the target radar signal that are inadvertently removed during interference mitigation.

FIG. 13 shows a process flow diagram 1300 with TFCT and GF in accordance with various embodiments. Each block 1302-1308 of the process flow diagram is executed at a central radar processor such as at a Rx processor 142 in the radar MCPU 138 of FIG. 2. At 1302, the central radar processor receives raw (i.e., unprocessed) ADC samples from the ADCs in the radar front end and converts them to a series of spectrograms associated with the different chirp indices (e.g., as shown in FIG. 9) by applying a STTF. At 1304, the central radar processor performs TFCT based on the plurality of spectrograms generated at block 1302 to generate a plurality of modified spectrograms in which the interference is mitigated. For example, in some embodiments, this includes performing the TFCT method of FIG. 10. At 1306, the central radar processor performs GF on the plurality of modified spectrograms generated at block 1304 to generate a plurality of gap-filled, interference-mitigated spectrograms. For example, in some embodiments, this includes performing the GF method of FIG. 12. At 1308, the central radar processor converts the plurality of gap-filled, interference-mitigated spectrograms back to ADC samples by performing an inverse STTF and forwarding the resulting output to a range estimation component such as one corresponding to Fast-Time (Range) Spectrum component 148. By executing the TFCT and GF techniques shown in FIG. 13, the central radar processor mitigates interference in the ADC samples received from the radar front end and increases the SNR of the ADC samples prior to performing range estimation. This increases the performance and accuracy of the radar system.

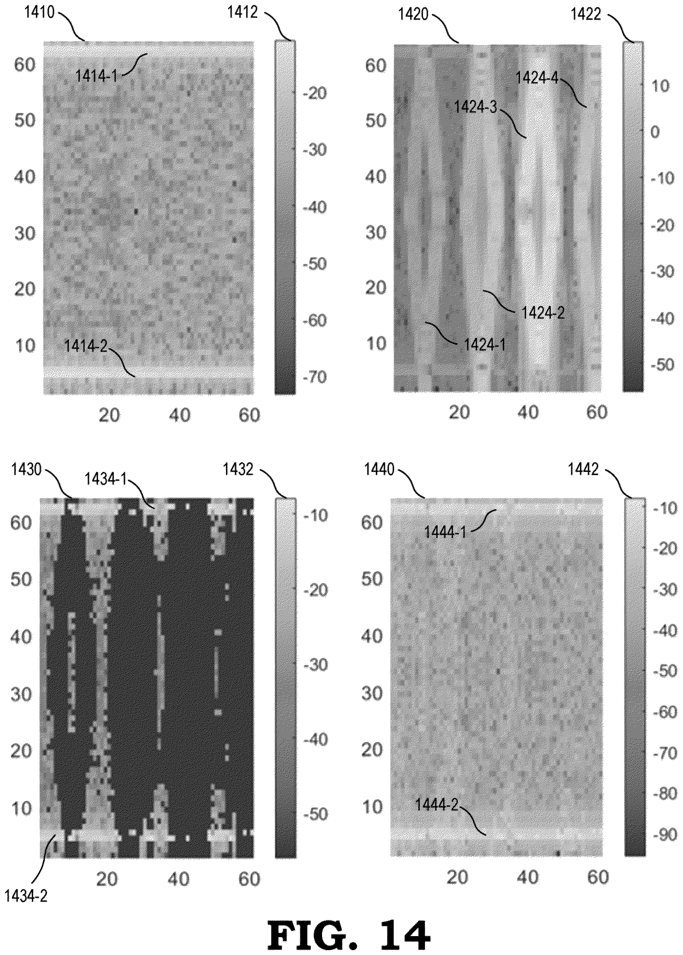

FIG. 14 shows spectrograms illustrating features of TFCT and GF in accordance with various embodiments. In each of the spectrograms 1410, 1420, 1430, 1440, the x-axis is a time bin index (e.g., in the aforementioned $p$ domain as discussed with respect to FIG. 9) and the y-axis is a frequency bin index (e.g., in the aforementioned $q$ domain as discussed with respect to FIG. 9). FIG. 14 also shows a legend 1412, 1422, 1432, 1442 for each respective spectrogram 1410, 1420, 1430, 1440 that provides information regarding the respective spectrogram's sample intensity in dB.

The first spectrogram 1410 shows an example of a received chirp reflection without any interference. Two targets are visible in the spectrogram samples as indicated by horizontal lines 1414-1, 1414-2.

The second spectrogram 1420 shows an example of the received chirp reflection in a high interference scenario. As depicted in the second spectrogram 1420, interference patterns 1424-1 to 1424-4 obscure the horizontal lines 1414-1, 1414-2 shown in spectrogram 1410 that are associated with the targets.

The third spectrogram 1430 shows an example of a modified spectrogram generated by a central radar processor after applying the TFCT interference mitigation techniques described herein. As shown, the interference patterns 1424-1 to 1424-4 visible in the second spectrogram 1420 are no longer present due to being suppressed by TFCT interference mitigation. However, in addition to removing the interference, the TFCT interference mitigation also inadvertently suppresses the spectrogram samples associated with the target as evident by the gaps in horizontal lines 1434-1, 1434-2. This reduces the SNR of the target radar signal that is provided to the range estimation component of the central radar processor.

The fourth spectrogram 1440 shows an example of a gap-filled, modified spectrogram generated by the central radar processor after performing TFCT and GF in accordance with various embodiments. That is, the central radar processor generates the fourth spectrogram 1440 by applying GF (e.g., such as the method shown in FIG. 12) to the third spectrogram 1430. As shown in FIG. 14, the fourth spectrogram 1440 closely resembles the first spectrogram 1410, e.g., the horizontal lines 1444-1, 1444-2 associated with the targets in the fourth spectrogram 1440 are similar in intensity to the horizontal lines 1414-1, 1414-2 associated with the targets in the first spectrogram 1410. Thus, by performing the TFCT and GF techniques in accordance with various embodiments described herein, the central radar processor is able to accurately identify and suppress interference while maintaining a robust signal strength for the target radar signal. Therefore, the ADC samples produced by the ADCs at the radar front end are modified to eliminate or suppress interference and keep the target radar signal information relatively intact for further radar signal processing such as range estimation, velocity estimation, or AoA estimation.

In the present disclosure, the term "spectrogram" is used to refer to a representation of frequency data set for illustrative and clarity purposes. In some embodiments, the frequency data sets produced based on the digitized samples and the modified frequency data sets are other types of frequency data representations (e.g., frequency data tables or other types of frequency data representations).

In a first embodiment, a method includes receiving a radar signal including a plurality of radar chirp reflections based on a transmitted radar signal reflecting from one or more targets and producing a plurality of frequency data sets from digitized samples generated from the received radar signal. Each frequency data set of the plurality of frequency data sets is associated with a corresponding received chirp reflection of the plurality of radar chirp reflections. The method further includes determining a threshold based on magnitudes of samples across the plurality of frequency data sets and suppressing samples in the plurality of frequency data sets based on the threshold to produce a plurality of modified frequency data sets. A range associated with the one or more targets is identified based on the plurality of modified frequency data sets.

In some aspects of the first embodiment, determining the threshold includes computing a magnitude at each sample position across the plurality of frequency data sets, where each sample position includes a similar time and frequency index in each of the plurality of frequency data sets, and identifying a maximum of the computed magnitudes for all of the sample positions across the plurality of frequency data sets to produce a plurality of maxima. Additionally, in some aspects, the first embodiment includes identifying a minimum of the plurality of maxima, and determining the threshold based on the minimum of the plurality of maxima. In some cases, the method includes applying a detection threshold margin value to the minimum of the plurality of maxima to determine the threshold. In some aspects, determining the threshold comprises executing a constant false alarm rate (CFAR) detection or median detection.

In some aspects of the first embodiment, producing the plurality of frequency data sets from digitized samples generated from the received radar signal includes receiving the digitized samples from one or more analog-to-digital converters (ADC) at a radar front end, and applying a Short-Time Fourier Transform (STTF) to the digitized samples to produce the plurality of frequency data sets, each of the plurality of frequency data sets comprising samples in a time domain and a frequency domain. Additionally, in some aspects, the method of first embodiment includes computing an inverse STFT of each modified frequency data set in the plurality of modified frequency data sets to generate a plurality of modified digitized samples, wherein identifying the range associated with the one or more targets is performed based on a range spectrum generated based on the plurality of modified digitized samples. Furthermore, in some cases, the method of the first embodiment includes generating the range spectrum by taking a fast Fourier Transform (FFT) of the plurality of modified digitized samples.

In some aspects of the first embodiment, the method includes recovering samples in the plurality of modified frequency data sets that were suppressed during the suppression of samples in the plurality of frequency data sets based on the threshold. In some aspects, recovering of samples in the plurality of modified frequency data sets includes utilizing an interpolation algorithm to identify gaps in the plurality of frequency data sets associated with the plurality of radar chirp reflections based on the transmitted radar signal reflecting from the one or more targets. For example, in some cases, the interpolation algorithm is a one of the group consisting of a Fourier Transform (FT) interpolation, an autoregressive (AR) Burg algorithm, a compressed sensing algorithm, an amplitude correction algorithm, and a phase retrieval algorithm. In the case that the interpolation algorithm is FT interpolation, in some aspects, the method includes identifying a first set of vectors at each sample position across the plurality of frequency data sets and identifying a second set of vectors at each sample position across the plurality of modified frequency data sets. In some cases, FT interpolation further includes computing a Doppler spectrum with nulling by applying a FT to the second set of vectors.

In a second embodiment, an apparatus includes a radar front end and a radar processor. The radar front end is configured to convert a received radar signal from one or more targets to digitized samples. The radar processor is configured to produce a plurality of frequency data sets from the digitized samples, where each frequency data set of the plurality of frequency data sets is associated with a corresponding received chirp reflection of a plurality of radar chirp reflections in the received radar signal, and determine a threshold based on magnitudes of samples across the plurality of frequency data sets. The radar processor is further configured to suppress samples in the plurality of frequency data sets based on the threshold to produce a plurality of modified frequency data sets and identify a range associated with the one or more targets based on the plurality of modified frequency data sets.

In some aspects of the second embodiment, the radar processor is configured to compute a magnitude at each sample position across the plurality of frequency data sets, wherein each sample position comprises a similar time and frequency index in each of the plurality of frequency data sets and identify a maximum of the computed magnitudes for all of the sample positions across the plurality of frequency data sets to produce a plurality of maxima. Additionally, in some aspects, the radar processor is configured to identify a minimum of the plurality of maxima and determine the threshold based on the minimum of the plurality of maxima.

In some aspects of the second embodiment, the radar processor is configured to produce the plurality of frequency data sets from the digitized samples by applying a Short-Time Fourier Transform (STTF) to the digitized samples to produce the plurality of frequency data sets, each of the plurality of frequency data sets comprising samples in a time domain and a frequency domain.

In some aspects of the second embodiment, the radar processor is configured to recover samples in the plurality of modified frequency data sets that were suppressed during the suppression of samples in the plurality of frequency data sets based on the threshold by utilizing an interpolation algorithm to identify gaps in the plurality of frequency data sets associated with the plurality of radar chirp reflections reflecting from the one or more targets.

In a third embodiment, a radar processor is configured to produce a plurality of frequency data sets from digitized samples generated from a received radar signal, where each frequency data set of the plurality of frequency data sets is associated with a corresponding received chirp reflection of a plurality of radar chirp reflections in the received radar signal, and determine a threshold based on magnitudes of samples across the plurality of frequency data sets. The radar processor is further configured to suppress samples in the plurality of frequency data sets based on the threshold to produce a plurality of modified frequency data sets and identify a range associated with one or more targets based on the plurality of modified frequency data sets.

In some aspects of the third embodiment, the radar processor is configured to recover samples in the plurality of modified frequency data sets that were suppressed during the suppression of samples in the plurality of frequency data sets based on the threshold by utilizing an interpolation algorithm to identify gaps in the plurality of frequency data sets associated with the plurality of radar chirp reflections.

In some embodiments, certain aspects of the techniques described above may be implemented by one or more processors of a processing system executing software. The software includes one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disk, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory) or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed is not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

**Claims**

1. A method comprising:

    receiving a radar signal comprising a plurality of radar chirp reflections based on a transmitted radar signal reflecting from one or more targets;
    producing a plurality of frequency data sets from digitized samples generated from the received radar signal, wherein each frequency data set of the plurality of frequency data sets is associated with a corresponding received chirp reflection of the plurality of radar chirp reflections;
    determining a threshold based on magnitudes of samples across the plurality of frequency data sets;
    suppressing samples in the plurality of frequency data sets based on the threshold to produce a plurality of modified frequency data sets; and
    identifying a range associated with the one or more targets based on the plurality of modified frequency data sets.

2. The method of claim 1, wherein determining the threshold comprises:

    computing a magnitude at each sample position across the plurality of frequency data sets, wherein each sample position comprises a similar time and frequency index in each of the plurality of frequency data sets; and
    identifying a maximum of the computed magnitudes for all of the sample positions across the plurality of frequency data sets to produce a plurality of maxima.

3. The method of claim 2, further comprising:

    identifying a minimum of the plurality of maxima; and
    determining the threshold based on the minimum of the plurality of maxima.

4. The method of claim 2 or 3, further comprising applying a detection threshold margin value to the minimum of the plurality of maxima to determine the threshold.

5. The method of any of claims 1 to 4, wherein determining the threshold comprises executing a constant false alarm rate (CFAR) detection or median detection.

6. The method of any of claims 1 to 5, wherein producing the plurality of frequency data sets from digitized samples generated from the received radar signal comprises:

    receiving the digitized samples from one or more analog-to-digital converters (ADC) at a radar front end; and
    applying a Short-Time Fourier Transform (STTF) to the digitized samples to produce the plurality of frequency data sets, each of the plurality of frequency data sets comprising samples in a time domain and a frequency domain.

7. The method of claim 6, further comprising:
    computing an inverse STFT of each modified frequency data set in the plurality of modified frequency data sets to generate a plurality of modified digitized samples, wherein identifying the range associated with the one or more targets is performed based on a range spectrum generated based on the plurality of modified digitized samples.

8. The method of claim 7, further comprising generating the range spectrum by taking a fast Fourier Transform (FFT) of the plurality of modified digitized samples.

9. The method of any of claims 1 to 8, further comprising recovering samples in the plurality of modified frequency data sets that were suppressed during the suppression of samples in the plurality of frequency data sets based on the threshold.

10. The method of claim 9, wherein the recovering of samples in the plurality of modified frequency data sets comprises utilizing an interpolation algorithm to identify gaps in the plurality of frequency data sets associated with the plurality of radar chirp reflections based on the transmitted radar signal reflecting from the one or more targets.

11. The method of claim 10, wherein the interpolation algorithm is a one of the group consisting of a Fourier Transform (FT) interpolation, an autoregressive (AR) Burg algorithm, a compressed sensing algorithm, an amplitude correction algorithm, and a phase retrieval algorithm.

12. The method of claim 11, wherein the FT interpolation comprises identifying a first set of vectors at each sample position across the plurality of frequency data sets and identifying a second set of vectors at each sample position across the plurality of modified frequency data sets.

13. The method of claim 11 or 12, wherein the FT interpolation comprises computing a Doppler spectrum with nulling by applying a FT to the second set of vectors.

14. An apparatus comprising:

a radar front end configured to convert a received radar signal from one or more targets to digitized samples;
a radar processor configured to execute instructions from a memory that manipulate the processor to:

produce a plurality of frequency data sets from the digitized samples, wherein each frequency data set of the plurality of frequency data sets is associated with a corresponding received chirp reflection of a plurality of radar chirp reflections in the received radar signal;
determine a threshold based on magnitudes of samples across the plurality of frequency data sets;
suppress samples in the plurality of frequency data sets based on the threshold to produce a plurality of modified frequency data sets; and
identify a range associated with the one or more targets based on the plurality of modified frequency data sets.

15. The apparatus of claim 14, the radar processor configured to:

compute a magnitude at each sample position across the plurality of frequency data sets, wherein each sample position comprises a similar time and frequency index in each of the plurality of frequency data sets; and
identify a maximum of the computed magnitudes for all of the sample positions across the plurality of frequency data sets to produce a plurality of maxima.

**FIG. 1**

100-2

RADAR MCPU 138

RADAR CONTROLLER 140 ─────→ (1)

RX PROCESSOR 142

(2) ─────→ INTERFERENCE CANCELLATION 144

INT SUPRRESSED ADC SAMPLES 146

FAST-TIME (RANGE) SPECTRUM 148

RANGE CHIRP ANTENNA CUBE 150

SLOW-TIME (DOPPLER) SPECTRUM 152

RANGE DOPPLER ANTENNA CUBE 154

DETECTION (CFAR) 156

DETECTED RANGE-DOPPLER CELLS 158

MIMO ARRAY MEASUREMENT CONSTRUCTION 160

ARRAY MEASUREMENT VECTOR 162

AOA ESTIMATION 164

TARGET INFO 166

170

# FIG. 2

**FIG. 3**

**FIG. 4**

FIG. 5

FIG. 6

700

**FIG. 7**

800

**FIG. 8**

900

920-4

930-4

908

928

920-3

930-3

906

926

920-2

930-2

904

924

902

920-1

922

930-1

60 50 40 30 20 10

FREQUENCY INDEX

10 20 30 40 50 60

TIME WINDOW INDEX

m

p

q

950

**FIG. 9**

1000

1002 — RECEIVE ADC SAMPLES

1020

1004 — GENERATE SPECTROGRAM OF EACH CHIRP
BASED ON RECEIVED ADC SAMPLES

1006 — COMPUTE MAGNITUDES OF THE
SPECTROGRAM SAMPLES

1008 — FOR EACH CELL POSITION, DETERMINE A
THRESHOLD BASED ON THE MAGNITUDES

1010 — SUPPRESS SAMPLES HAVING MAGNITUDES
GREATER THAN THE THRESHOLD

1012 — CONVERT BACK TO TIME DOMAIN ADC
SAMPLES

1014 — COMPUTE RANGE SPECTRUM

# FIG. 10

**FIG. 11**

```
1200
  ┌─────────────────────────────────────┐
  │ 1202  IDENTIFY VECTORS BEFORE TFCT   │
  │       AND AFTER TFCT PROCESSING      │
  └─────────────────────────────────────┘
                    │
                    ▼
  ┌─────────────────────────────────────┐
  │ 1204  APPLY FFT TO COMPUTE DOPPLER   │
  │       SPECTRUM WITH NULLING          │
  └─────────────────────────────────────┘
                    │
                    ▼
  ┌─────────────────────────────────────┐
  │ 1206  PRESERVE DOMINANT COMPONENTS   │
  └─────────────────────────────────────┘
                    │
                    ▼
  ┌─────────────────────────────────────┐
  │ 1208  COMPUTE INVERSE FFT            │
  └─────────────────────────────────────┘
                    │
                    ▼
  ┌─────────────────────────────────────┐
  │ 1210  FILL IN GAPS                   │
  └─────────────────────────────────────┘
```

# FIG. 12

```
1300

1302           1304      1306      1308
FROM   ┌──────────┐  ┌──────┐  ┌──────┐  ┌────────────┐  TO RANGE
ADC →  │CONVERT ADC│→ │ TFCT │→ │  GF  │→ │CONVERT BACK│→ ESTIMATION
       │ SAMPLES  │  └──────┘  └──────┘  │TO ADC SAMPLES│
       └──────────┘                      └────────────┘
```

# FIG. 13

**FIG. 14**

Europäisches
Patentamt

European
Patent Office

Office européen
des brevets

# EUROPEAN SEARCH REPORT

**Application Number**

EP 24 19 2174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/349986 A1 (WU RYAN HAOYUN [US] ET AL) 3 November 2022 (2022-11-03) * paragraphs [0030], [0039] - [0048], [0050]; figures 2-4 * | 1-15 | INV. G01S7/35 G01S13/34 G01S13/58 |
| A | US 2019/113600 A1 (MELZER ALEXANDER [AT] ET AL) 18 April 2019 (2019-04-18) * paragraphs [0036] - [0069]; figures 6-17 * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 14 January 2025 | Metz, Carsten |

EPO FORM 1503 03.82 (P04C01)

## ANNEX TO THE EUROPEAN SEARCH REPORT
## ON EUROPEAN PATENT APPLICATION NO.

EP 24 19 2174

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | Publication date | Patent family member(s) | Publication date |
|---|---|---|---|
| US 2022349986 A1 | 03-11-2022 | EP 4083654 A1 | 02-11-2022 |
| | | US 2022349986 A1 | 03-11-2022 |
| US 2019113600 A1 | 18-04-2019 | CN 109669161 A | 23-04-2019 |
| | | DE 102018123383 A1 | 18-04-2019 |
| | | JP 6726253 B2 | 22-07-2020 |
| | | JP 2019074527 A | 16-05-2019 |
| | | KR 20190041949 A | 23-04-2019 |
| | | US 2019113600 A1 | 18-04-2019 |

EPO FORM P0459

For more details about this annex : see Official Journal of the European Patent Office, No. 12/82